# EUROPEAN PATENT SPECIFICATION

(11) **EP 2 264 995 B1**
(45) Date of publication and mention of the grant of the patent: **18.12.2019**
(21) Application number: 10166067.8
(22) Date of filing: 15.06.2010
(51) Int. Cl.: H04N 1/32, G06K 9/20

(54) **Image processing apparatus, image processing method, and computer program**
Bildverarbeitungsvorrichtung, Bildverarbeitungsverfahren und Computerprogramm
Appareil de traitement d'images, procédé de traitement d'images et programme informatique

(30) Priority: 16.06.2009 JP 2009143535
(43) Date of publication of application: 22.12.2010
(73) Proprietor: CANON KABUSHIKI KAISHA, Ohta-ku Tokyo 146-8501 (JP)
(72) Inventor: Misawa, Reiji, Ohta-ku, Tokyo (JP); Iinuma, Osamu, Ohta-ku, Tokyo (JP)
(74) Representative: Foxon, Rachel Siobhan

(56) References cited:
- EP-A2- 1 139 649
- EP-A2- 1 182 863
- JP-A- 1 081 076
- JP-A- 2 240 772
- JP-A- 7 037 071
- JP-A- 8 317 155
- JP-A- 59 178 567
- JP-A- 62 003 375
- JP-A- 2001 034 633
- JP-A- 2006 185 027
- JP-A- 2009 065 592
- US-A- 5 682 540
- US-A1- 2005 068 576
- US-A1- 2006 184 574
- US-A1- 2007 233 613
- US-A1- 2008 117 461
- US-A1- 2008 278 778

## Description

### BACKGROUND OF THE INVENTION

### Field of the Invention

The present invention relates to an image processing apparatus, an image processing method, and a computer program, which may be stored on a computer-readable storage medium, for executing processing on a filed electronic document.

### Description of the Related Art

Recently, the multi-functionalization of copying machines due to digitization of the internal image processing is proceeding at an extremely fast pace. For example, copying machines now include as basic functions a copy function for coping a document, a page description language (PDL) printing function (a printing function of data described in a PDL) capable of printing a document generated by a host computer, a scan function, a send function for sending a scanned image via a network and the like. Additionally, recent copying machines include a large variety of functions such as a box function for storing image data generated by the copy function, the PDL function, or the scan function in a storage unit (box) in the copying machine to enable the stored image data to be subsequently reused in printing, a document image edit function and the like.

Moreover, an electronic document filing technique is drawing attention which files an image of a scanned document by storing a scanned image in the copying machine or by storing a scanned image sent via a network on a server. Electronic document filing enables a search for a stored electronic document to be performed easily and facilitates reuse of the electronic document, since a document image is stored in a database during storage. On the other hand, electronic document filing suffers from the problem that a large amount of memory space is required to store the documents. To resolve such problem, Japanese Patent Application Laid-Open No. 08-317155 discusses a technique in which input scanned image data is compared with an already-filed original document, and the additional information (additional portion) is extracted. Then, the additional information is stored in a layered structure in the filed document. Further, Japanese Patent Application Laid-Open No. 08-317155 also discusses an example in which the original document acting as the comparison target for the input image data is specified based on an instruction from a user, and an example in which a selection code, such as a barcode, is given when printing the electronic document, and the original document is specified by identifying this selection code when the electronic document is scanned. In addition, in the technique discussed in Japanese Patent Application Laid-Open No. 08-317155, when a document is again augmented after being already augmented, this augmented portion is extracted. More specifically, in the technique discussed in Japanese Patent Application Laid-Open No. 08-317155, an augmented portion can be extracted each time the same paper document is augmented.

However, in the technique discussed in Japanese Patent Application Laid-Open No. 08-317155, no consideration is given to a case for selecting and newly printing out only the object which satisfies a condition set by the user from among the objects in the filed electronic document.

US 2007/0233613 discloses techniques for processing media data. A media key may be used to access media data for which the media key has been created. The media data may be a document. The media key may comprise a thumbnail image of the media data and machine readable information comprising information that can be used to access the media data for which the key is created. JP 2009 065592 A discloses an apparatus that outputs printed paper containing a QR code formed on a document, wherein the QR code corresponds to information about a document ID, information about an object field ID, and information about an operation log. The user can access parts of the document according to his/her permissions. JP 2009 065592 A further discloses a scanning unit that scans the document with the QR code and recognizes the encoded object ID, the document ID and the operation log. The operation log records the operations performed on each object of the document.

### SUMMARY OF THE INVENTION

According to a first aspect of the present invention, there is provided an image processing apparatus as specified in claims 1 to 6. According to a second aspect of the present invention, there is provided an image processing method as specified in claims 7 to 8. According to a third aspect of the present invention, there is provided a computer program as specified in claims 9 and 10.

According to exemplary embodiments of the present invention, new printing out can be performed by selecting an object based on an arbitrary condition from among a plurality of objects included in a filed electronic document. Further, even when additional editing has been performed on such a printed product, the difference (added portion) can be easily extracted, and the object data of this difference can be added to and stored in the original electronic document.

In addition, even when new printing out is performed by selecting an object of a print target and then changing a print setting such as the paper size, the difference can be extracted, and the object data of the difference can be added to and stored in the original electronic document.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 illustrates an internal structure of portable document format (PDF) data according to an exemplary embodiment of the present invention.
Fig. 2 is a block diagram illustrating a multifunction peripheral (MFP) according to a first exemplary embodiment of the present invention.
Fig. 3 is a block diagram illustrating a configuration example of a data processing unit in Fig. 2.
Fig. 4 is a flowchart illustrating processing performed when printing electronic document data according to the first exemplary embodiment.
Fig. 5 is a flowchart illustrating processing performed when updating electronic document data according to the first exemplary embodiment.
Figs. 6A to 6G are explanatory diagrams of PDF data according to the first exemplary embodiment.
Figs. 7A to 7F are explanatory diagrams of user interface screens displayed on an operation unit in Fig. 2.
Figs. 8A and 8B are explanatory diagrams of a QR code according to the first exemplary embodiment.
Fig. 9 is a flowchart illustrating processing performed by a pattern generation unit according to the first exemplary embodiment.
Fig. 10 is a flowchart illustrating processing performed by a pattern detection/decoding unit according to the first exemplary embodiment.
Fig. 11 illustrates print setting information according to a second exemplary embodiment of the present invention.
Fig. 12 is a flowchart illustrating processing performed when updating electronic document data according to the second exemplary embodiment.

### DESCRIPTION OF THE EMBODIMENTS

Various exemplary embodiments, features, and aspects of the invention will be described in detail below with reference to the drawings.

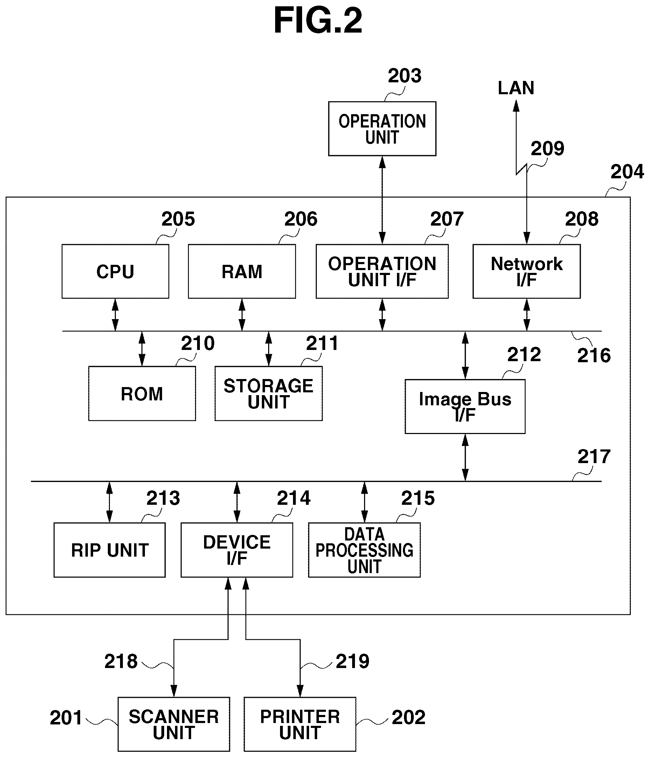

Fig. 2 illustrates a configuration an MFP used as an image processing apparatus according to a first exemplary embodiment of the present invention. The MFP includes a scanner unit 201, which is an image input device, a printer unit 202, which is an image output device, an operation unit 203, which is a user interface such as a touch panel, a control unit 204 configured from a central processing unit (CPU) or a memory and the like. The control unit 204 is a controller for input and output of image information and device information. Further, the control unit 204 is connected to the scanner unit 201, the printer unit 202, and the operation unit 203. The control unit 204 can also communicate with an external apparatus via a local area network (LAN) 209.

A CPU 205 is an information processing unit (computer) for controlling the overall system. A random access memory (RAM) 206 is used as a system work memory when the CPU 205 is operating, and is an image memory for temporarily storing image data. A read-only memory (ROM) 210 is a boot ROM, in which a program such as a system boot program is stored. A storage unit 211 is a hard disk drive, which stores system control software, image data, electronic documents and the like. Although the storage unit 211 is preferably integral to the image processing apparatus the storage unit may be external to the image processing apparatus and connected e.g. via the LAN 209 or a WAN or the internet. The connection may be a wired (e.g. USB) or wireless connection. An operation unit interface (I/F) 207 is an interface unit with the operation unit (UI) 203, which outputs image data for display on the operation unit 203. Further, the operation unit I/F 207 plays a role of transmitting to the CPU 205 information about contents instructed by the user of the image processing apparatus via the operation unit 203. A network I/F 208 is an interface which connects the image processing apparatus connected to the LAN 209 for image and output of information about a packet format. The above devices are arranged on a system bus 216.

An image bus interface 212 is a bus bridge connecting the system bus 216 and an image bus 217, which transfers image data at high speed, for converting a data structure. The image bus 217 is configured by, for example, a peripheral component interconnect (PCI) bus or an IEEE (Institute of Electrical and Electronics Engineers) 1394. A raster image processor (RIP) 213, a device I/F 214, and a data processing unit 215 are arranged on an image bus 222. The RIP 213 analyzes a PDL code, and rasterizes the analysis result into a bitmap image having a specified resolution, thereby realizing "rendering processing". During the rasterization into this bitmap image, attribute information is added to each pixel unit or region unit. This processing is called image region determination processing. From this image region determination processing, attribute information indicating an object type, such as a character (text), a line, a graphic, or an image, is given to each pixel or each region. For example, based on the type of object in the PDL description included in the PDL code, an image region signal is output from the RIP 213. The attribute information corresponding to the attribute indicated by that signal value is associated with and stored in the pixel or region corresponding to the object. Therefore, associated attribute information is attached to the image data. The device I/F 214 connects the scanner unit 201, which is an image input device, to the control unit 204 via a signal line 218, and connects the printer unit 202, which is an image output device, to the control unit 204 via a signal line 219. Further, the device I/F 214 performs synchronous/asynchronous conversion of the image data.

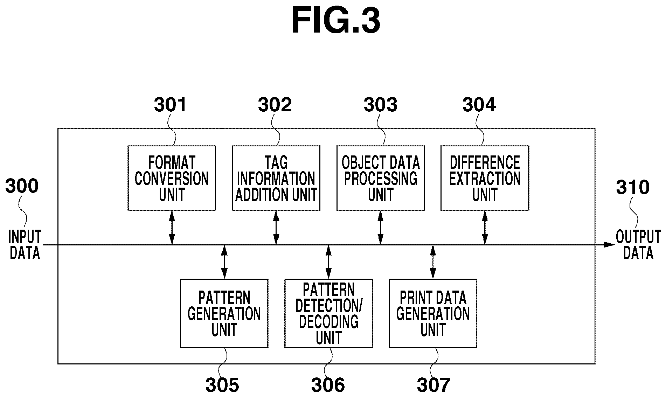

Next, the processing executed by the data processing unit 215 illustrated in Fig. 2 will be described in more detail using Fig. 3. The data processing unit 215 includes a format conversion unit 301, a tag information addition unit 302, an object data processing unit 303, a difference extraction unit 304, a pattern generation unit 305, a pattern detection/decoding unit 306, and a print data generation unit 307. Although in the present exemplary embodiment the various units of the data processing unit 215 (the processing units illustrated in Fig. 3) are realized by a computer executing a computer program stored in a computer-readable storage medium, the present invention is not limited to this. For example, part or all of the data processing unit 215 (the various processing units illustrated in Fig. 3) may be realized by hardware such as an electronic circuit.

When input data 300 is input, the data processing unit 215 performs processing with the various processing units 301 to 307, and outputs output data 310. The input data 300 is bitmap data (image data) obtained by reading a document with the scanner unit 201, or bitmap data or electronic document data stored in the storage unit 211. "Electronic document data" refers to data from an electronic document having a format such as PDF, extensible markup language (XML) paper specification (XPS), Office Open XML, and the like. The output data 310 is bitmap data or electronic document data which is stored in the storage unit 211, printed out by the printer unit 202, sent to a not-illustrated external apparatus connected to the network via the LAN 209 or the like. The present exemplary embodiment is described using an example in which PDF is used as the electronic document data (hereinafter, PDF data).

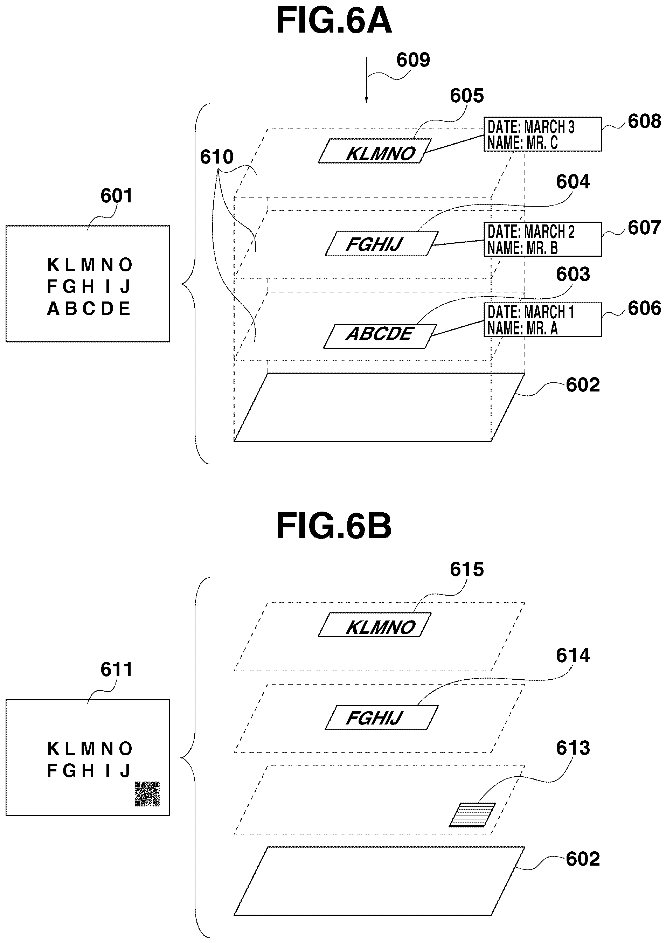

Next, the PDF data will be described in more detail using Figs. 6A to 6G. Fig. 6A is a schematic diagram illustrating PDF data stored in the storage unit 211. An actual example of software which can draw and reproduce PDF data is Adobe Reader (™) . In the present exemplary embodiment, the PDF data can also be displayed by the below-described operation unit 203.

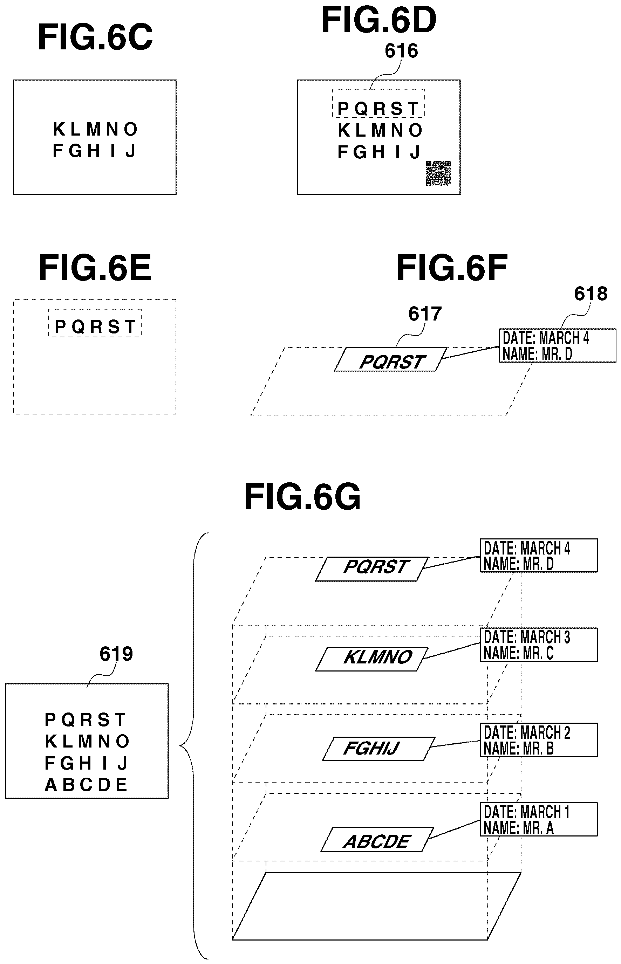

Data 601 illustrated in Fig. 6 is an example of the PDF data stored in the storage unit 211. Data 602 to 605 schematically illustrate a layered structure in the PDF data 601. Data 602 to 605 are each Joint Photographic Experts Group (JPEG) data. JPEG data 602 is data representing a background image, and JPEG data 603 to 605 are character string data drawn on top of the background. The present exemplary embodiment will be described using an example in which JPEG data 602 is completely configured by white pixels, and JPEG data 603, 604, and 605 are respectively configured by character string information of bitmap images of "ABCDE", "FGHIJ", and "KLMONO". Data other than JPEG data may be used, as long as PDF data can internally store such data. For example, MMR data, ZIP data, and the like may be used. In addition, the information constituting the JPEG data is not limited to character string information. A photograph, a line drawing, an illustration, and the like may also be used.

When the PDF data is expressed in a layered structure, each layer is called a "layer". More specifically, the JPEG data 602 to 605 are not only JPEG data, but are also the layers forming the PDF data 601. When the PDF data is expressed with layers, if the image is viewed from the direction of the arrow 609 illustrated in Fig. 6A (i.e., JPEG data 602 to 605 are drawn in a superimposed manner in that order), when the PDF data is displayed, the result looks like the data 601. Since a portion 610 other than the objects (i.e., JPEG data 602 to 605) in the respective layers is transparent, if the image is viewed from the direction of arrow 609, the portion corresponding to the periphery of the JPEG data 603 to 605 looks like the background JPEG data 602. When data 605 is positionally superimposed over the JPEG data 603 and 604, if the image is viewed from the direction of arrow 609, the superimposed portion of the JPEG data 603 and 604, which are in layers beneath the JPEG data 605, cannot be seen. In the example of Fig. 6A, the JPEG data 603 to 605 are not positionally superimposed, *so that* if the image is viewed from the direction of arrow 609, the image looks like the PDF data 601.

In the present exemplary embodiment, for ease of description, the layers of JPEG data 603 to 605 are all referred to as "object data".

In Fig. 6A, tag information 606 to 608 are respectively given to object data 603 to 605. For example, the tag information 606 "Date: March 1, Name: Mr. A" is given to object data 603. The tag information 606 to 608 are used based on a condition setting by the below-described operation unit 203.

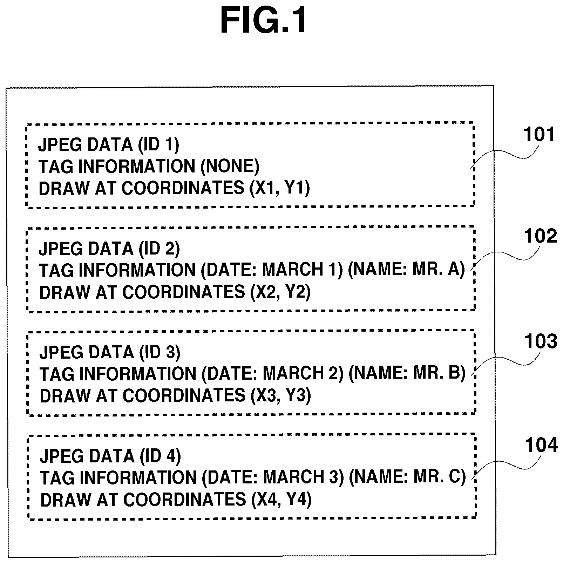

Next, the internal structure of the PDF data will be described using Fig. 1. The schematic diagram of PDF data illustrated in Fig. 6A has the internal data structure illustrated in Fig. 1. The object data 602 to 605 illustrated in Fig. 6A respectively correspond to the object data 101 to 104 illustrated in Fig. 1. For example, the object data 603 illustrated in Fig. 6A corresponds to the object data 102 illustrated in Fig. 1. Further, the object data 602 representing the background illustrated in Fig. 6A corresponds to the object data 101 illustrated in Fig. 1. The object data 101 to 104 are described in postscript (PS) language for constituting each piece of the PDF data.

Further, the object data 102 illustrated in Fig. 1 (corresponding to the object data 603 illustrated in Fig. 6A) , has object ID information indicating that it is JPEG data with an object ID 2. Further, "(Date: March 1), (Name: Mr. A) is associated with the object data 102 as tag information. More specifically, when searching the object data, for example, if the search is performed for the tag information "March 1", the object data 102 is extracted. Further, "Draw at coordinates (X2, Y2)" is a command that the JPEG data be drawn starting from the point (X2, Y2).

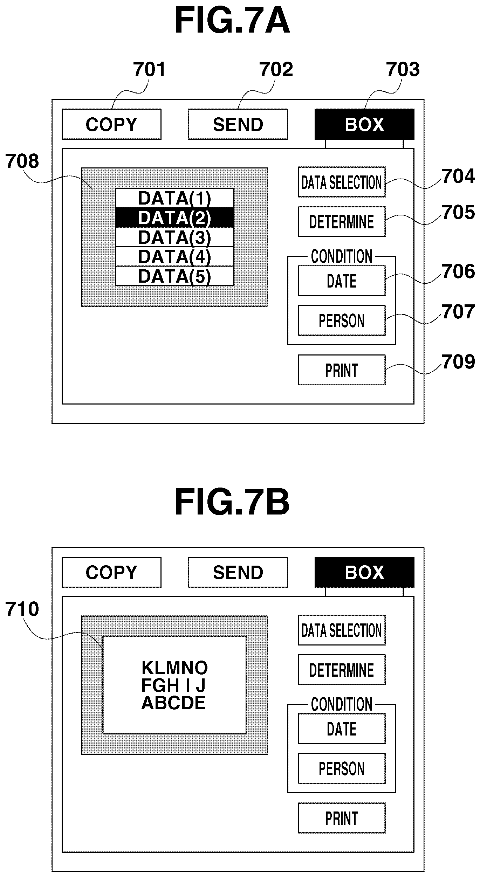

Next, the operation unit 203 will be described in more detail using the user interface screens illustrated in Figs. 7A to 7F. Although in the present exemplary embodiment the operation unit 203 is described as connected to the MFP, the present invention is not limited to this. For example, the present invention can also be realized by an operation unit of a computer having similar functions, which is connected over a network by the LAN 209. The MFP thus comprises a means (e.g. operation unit 203 or network I/F 208) for receiving a condition setting instruction from a user.

The screen illustrated in Fig. 7A is an example of a screen which is displayed on the operation unit 203 in the MFP. A button 701 is for operating a copy function. If the button 701 is selected, the screen switches to a setting screen for printing out with the printer unit 202 an image of a document read by the scanner unit 201, so that the user can use the copy function. A button 702 is for operating a send function. If the button 702 is selected, the screen switches to a setting screen for storing the image of the document read by the scanner unit 201 in the storage unit 211 as bitmap data or electronic document data, or for sending the image to an external apparatus via the network. Thus, this button 702 allows the user to use the send function. A button 703 is for operating a box function. If the button 703 is selected, the screen switches to a screen for printing out with the printer unit 202 by calling up the bitmap data or electronic document data stored in the storage unit 211, and sending the data to an external apparatus via the network. Thus, this button allows the user to use the box function.

The screen illustrated in Fig. 7A is the screen when the box function button 703 has been selected. In the box function according to the present exemplary embodiment, after the electronic document data stored in the storage unit 211 is selected, a condition setting instruction can be further performed. Data selection and condition setting will be described in more detail below. When the box button 703 is selected, as illustrated in the screen of Fig. 7A, a data selection button 704, a determination button 705, a date button 706, a person button 707, a display window 708, and a print button 709 are displayed. Then, if the selection button 704 is pressed, a list of the electronic document data stored in the storage unit 211 is displayed on the display window 708. If the user presses desired data from in the list, the selected data is highlighted. In the display window 708 illustrated in Fig. 7A, as an example, five pieces of data, data (1) to (5), are displayed, and data (2) is in a selected state.

If the determination button 705 is pressed, an image (or a thumbnail image) of the data selected in the list is displayed on the display window 708. In the display window 708 of the image illustrated in Fig. 7B, an image 710 of the data (2) selected as an example is displayed. This data (2) has a data structure like that illustrated in Fig. 1 (Fig. 6A). If the print button 709 is then pressed, the image 710 of the data (2) stored in the storage unit 211 is printed out. At this stage, address information (electronic document specifying information for specifying an electronic document) indicating the location of the data (2) and ID information indicating the ID of the printed out object data are embedded in the image of the data (2) as an encoded image pattern (QR code), and the resultant image is printed out. This encoded image pattern will be described below.

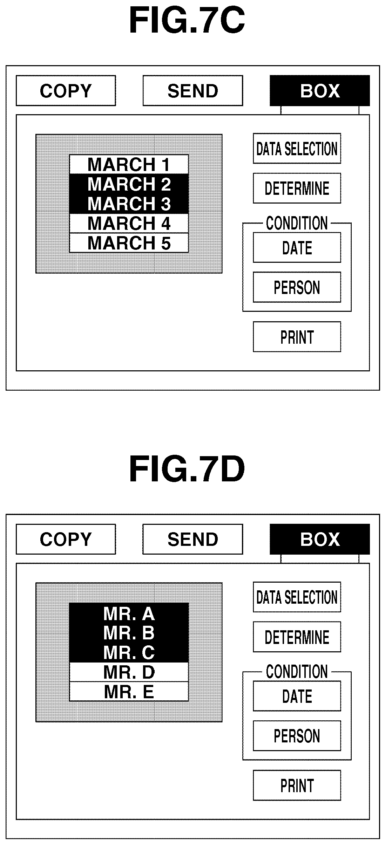

In the present exemplary embodiment, in a state in which the image 710 of the selected data (2) is displayed, before instructing printing output, based on an instruction from the user, condition setting can be performed based on the tag information. In the present exemplary embodiment, condition setting enables a date condition and a person condition to be set. For example, if the date button 706 is pressed, a list of dates or a calendar for selecting the date condition is displayed on the display window 708. If a date desired by the user is pressed, the selected date is highlighted in a selected state. In the display window 708 of the screen illustrated in Fig. 7C, five dates, from March 1 to March 5, are displayed as an example. In this example, March 2 and March 3 have been selected. Similarly, if the person button 707 is pressed, a list of people's names (or other information indicating identity) for selecting the person condition is displayed on the display window 708. If the name of the person desired by the user is pressed, the pressed name is highlighted in a selected state. In the display window 708 of the screen illustrated in Fig. 7D, five names, Mr. A to Mr. E, are displayed as an example. In this example, Mr. A, Mr. B, and Mr. C have been selected. When the above condition setting is finished, and the determination button 705 is pressed, the set conditions are applied on the image 710 of the data (2). More specifically, the background image data and the object data of the portion associated with the tag information applicable to the following condition equation are displayed in the image 710. Condition equation = ((March 2) OR (March 3) AND (Mr. A) OR (Mr. B) OR (Mr. C))

This condition equation is stored in a storage device such as the RAM 206 as a condition parameter. Further, for example, when only March 1 is selected as the date condition and Mr. B selected as the person condition, the condition equation = ((March 1) AND (Mr. B)). The condition setting is not limited to a date condition and a person condition. Other attribute conditions such as a character, a photograph, a line drawing, an illustration, and the like may also be used.

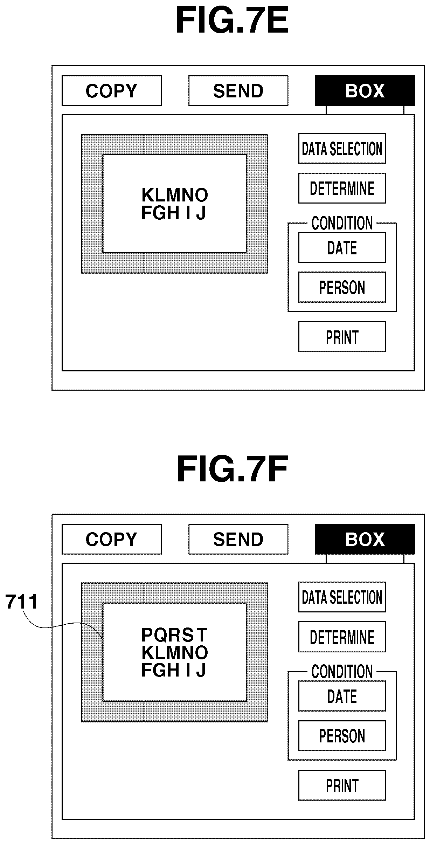

Next, the portion applicable to the above condition equation ((March 2) OR (March 3) AND (Mr. A) OR (Mr. B) OR (Mr. C)) is displayed in the display window 708 of the screen illustrated in Fig. 7E. Since the displayed image was generated based on an object extracted from the data (2), this image shall be referred to as data (2'). If the print button 709 is pressed, the data (2') extracted from the data (2) stored in the storage unit 211 is printed out. At this stage, address information indicating the location of the data (2) in the storage unit 211 and ID information indicating the ID of the object data printed out as data (2') are embedded in the image of the data (2') as a QR code, which is an encoded image pattern, and the resultant image is printed out.

The object data processing unit 303 has a function for extracting object data from the electronic document data stored in the storage unit 211 based on the condition parameter stored in a storage device such as the RAM 206 and the tag information. This function will now be described using the PDF data illustrated in Fig. 6A. The data (2) selected in the display window 708 illustrated in Fig. 7A will be used as the PDF data 601 illustrated in Fig. 6A. Since the image 710 displayed on the display window 708 illustrated in Fig. 7A does not have conditions set, the PDF data 601 is displayed as is. The data (2') is an image generated based on the object data extracted from the data (2) based on the conditions set in the above-described manner. If the condition equation = ((March 2) OR (March 3) AND (Mr. A) OR (Mr. B) OR (Mr. C)), based on the tag information 606 to 608, of the object data 603 to 605 included in the PDF data 601, the object data 604 and 605 are extracted. The object data 603 is not extracted, because although the person condition is applicable, the date condition is not.

Further, the object data processing unit 303 has a function for combining the extracted object data to generate bitmap data. Fig. 6C is a schematic diagram illustrating a case in which the object data 604 and 605 are combined. Here, this combined data is bitmap data.

In addition, the object data processing unit 303 has a function for, when a QR code is included in the scanned image, extracting the object data from the electronic document data based on address information (electronic document specifying information) and object ID information obtained from the QR code.

Moreover, the object data processing unit 303 has a function for generating object data from a difference extracted by the difference extraction unit 304.

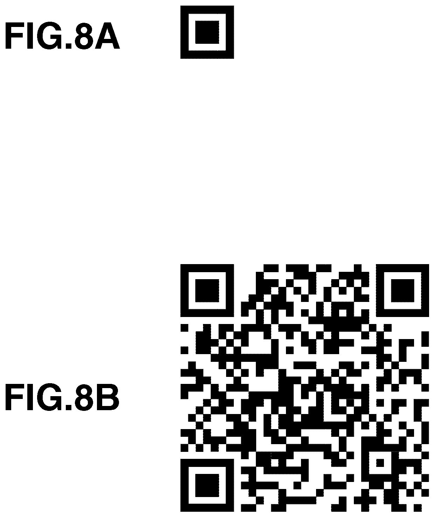

Before describing the pattern generation unit 305 and the pattern detection/decoding unit 306, the QR code, which is an encoded image pattern, used in the present exemplary embodiment will be described. The encoded image pattern used in the present exemplary embodiment is not limited to a QR code. Other encoded codes (other two-dimensional codes) may also be used. Preferably, an encoded image pattern having a detection pattern is used. This is because a detection pattern can be used as a symbol (a cut-out symbol) for detecting the position of an encoded image pattern. Thus, an encoded image pattern having such a detection pattern can be easily detected. The pattern illustrated in Fig. 8A is a QR code detection pattern. The QR code example illustrated in Fig. 8B has a detection pattern at three locations.

The QR code is an encoded image pattern defined by Japanese Industrial Standards (JIS) 0X0510. In the present exemplary embodiment, it is assumed that the QR code is added when printing the electronic document data (PDF data). This encoding flow will now be described.

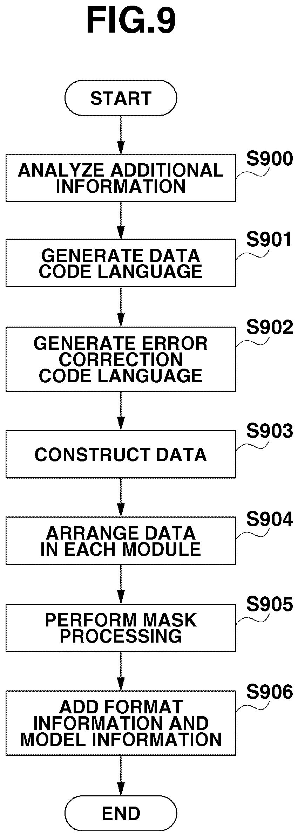

Fig. 9 is a flowchart illustrating the processes for encoding additional information, such as copying restriction information, into a QR code symbol (encoding based on JIS 0X0510) . This flow may be performed by the apparatus which adds the QR code to the document and prints, or by a computer connected via a network.

First, in step S900, the pattern generation unit 305 analyzes the additional information of the encoding target, and identifies the amount of data included in the additional information. Then, the pattern generation unit 305 detects errors, selects an error correction level, and selects the minimum model (QR code size) which can include the additional information.

Next, in step S901, the pattern generation unit 305 converts the additional information into a predetermined bit string, optionally adds an indicator representing a data mode (numbers, alphanumeric characters, 8-bit bytes, Chinese characters etc.) and a terminal pattern, and converts the resultant string into a data code language.

Then, in step S902, in order to add an error correction code language, the pattern generation unit 305 divides the data code language generated in step S901 into a predetermined number of blocks based on the model and the error correction level, performs remainder calculation and the like, and generates an error correction code language for each block.

Next, in step S903, the pattern generation unit 305 lines up the data code languages obtained in step S901 and the error code languages for each of the blocks obtained in step S902, and constructs code language string data.

In step S904, the pattern generation unit 305 arranges the code language string data along with a pattern for position detection and other constituent components (separation pattern, timing pattern, positioning pattern, etc.) in a matrix based on predetermined arrangement rules. Then, the pattern generation unit 305 assigns and arranges the various-bit data in each module.

In step S905, the pattern generation unit 305 selects the optimum mask pattern for each encoded region of the encoded image pattern, and converts a mask processing pattern into the modules obtained in step S904 by XOR calculation. The optimum mask pattern will now be described. White regions, which are the minimum unit constituting the encoded image pattern, shall be referred to as "white cells", and black regions shall be referred to as "black cells". A mask pattern capable of performing mask processing so that the ratio between the white cells and the black cells is close to 1 : 1 is the optimum mask pattern. Thus, by making the ratio 1 : 1 (ensuring that there is no bias between white or black), a pattern capable of identical handling can be produced even if there are difficulties in forming the black cells or in forming the white cells.

Finally, in step S906, the pattern generation unit 305 generates format information and model information for describing the error correction level and a mask pattern reference, adds this generated information to the modules obtained in step S905, and completes the encoded image pattern.

As a result of this encoding, the QR code becomes an encoded image pattern with an appearance like that illustrated in Fig. 8B, for example. In the present invention, the QR code pattern generated by encoding address information about the electronic document and ID information about the object data is added onto a paper document and printed. Therefore, if this paper document is scanned by the scanner unit 201 of the MFP, various information can be obtained from the QR code. In addition to the above-described information, information about various attributes such as the output printer and time of the document may be encoded and included in the QR code.

Next, based on such a QR code, the pattern detection/decoding unit 306 will be described. The pattern detection/decoding unit 306 detects detection patterns present in the encoded image pattern, and confirms the position of the encoded image patterns. Although for speed the detection is usually performed on a digitized image, the detection may also be performed on a multi-valued image. Further, to improve the detection efficiency, detection may be performed on a downsampled image having a reduced resolution. Moreover, the pattern detection/decoding unit 306 performs encoding processing on the detected encoded image patterns (QR code), and extracts information data.

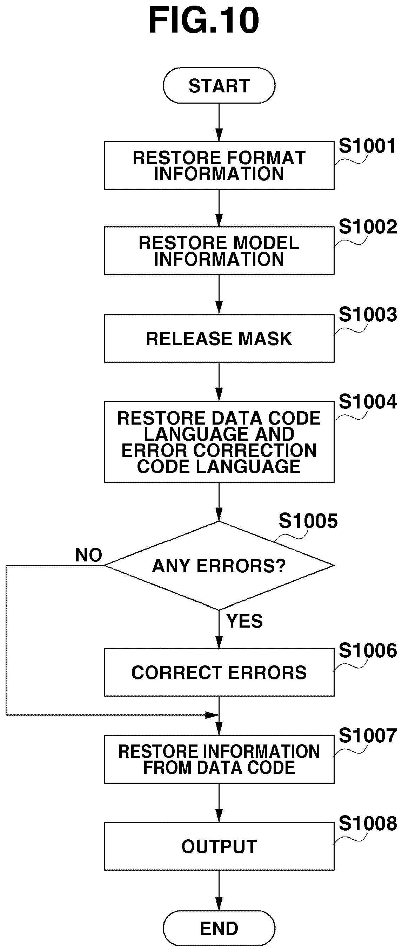

Fig. 10 illustrates processing performed during encoding of an encoded image pattern using a QR code as an example.

First, in step S1001, the pattern detection/decoding unit 306 restores format information from a pattern positioned adjacent to a detection pattern, and obtains the error correction level and the mask pattern applied in the encoded image pattern.

In step S1002, the pattern detection/decoding unit 306 restores model information from a pattern positioned adjacent to a detection pattern, and determines the model of the encoded image pattern.

In step S1003, the pattern detection/decoding unit 306 releases the mask by performing an exclusive OR (XOR) calculation on the encoded region bit pattern using the mask pattern specified based on the format information.

In step S1004, based on the arrangement rule corresponding to the model, the pattern detection/decoding unit 306 reads the encoded region bit pattern from which the mask was released in step S1003, and restores the data code language and the error code language.

In step S1005, the pattern detection/decoding unit 306 detects data errors based on the error correction code. If it is determined that there are no errors (NO in step S1005), the processing proceeds to step S1007. If it is determined that there is an error (YES in step S1005), the processing proceeds to step S1006.

In step S1006, the pattern detection/decoding unit 306 corrects the detected error based on the error correction code.

In step S1007, based on a mode indicator, the pattern detection/decoding unit 306 divides the data into segments, and restores the encoded information from the data code language.

In step S1008, the pattern detection/decoding unit 306 outputs the information restored in step S1007.

The print data generation unit 307 combines the object data extracted by the object data processing unit 303 and the QR code generated by the pattern generation unit 305 to generate print data. As illustrated by the schematic diagram of Fig. 6B, the print data generation unit 307 combines the object data 614 and 615 extracted based on the set conditions, the generated QR code 613, and the data representing the background image to generate print data 611. Then, the print data generation unit 307 executes print processing. As described above, the QR code 613 is generated by encoding the address information indicating the location of the PDF data 601 stored in the storage unit 211 and the object ID information indicating the number of the object data 604 and 605 extracted from the electronic document data.

The difference extraction unit 304 extracts a difference between the bitmap data read by the scanner unit 201 and the data (printed out data) combined by the object data processing unit 303. More specifically, the difference extraction unit 304 extracts as the difference the portion newly added by the user to the document after printing. When extracting the difference, the QR code on the input bitmap data is excluded. Fig. 6C is a schematic diagram when the object data 604 and 605 are combined. The QR code is conferred on the data illustrated in Fig. 6C, and the paper document is printed out. Fig. 6D illustrates a state after the user has edited (augmented) a printed out paper document. The character string 616 (character string "PQRST") illustrated in Fig. 6D is entered by the user. The difference extraction unit 304 extracts the difference between the bitmap data illustrated in Fig. 6C and the bitmap data illustrated in Fig. 6D read by the scanner unit 201. As an example of the method for extracting the difference, in the present exemplary embodiment, each image is digitized and compared based on pixel units. At this stage, the QR code on the input bitmap data illustrated in Fig. 6D is excluded. Fig. 6E illustrates bitmap data of the obtained difference as the comparison result. Based on the bitmap data of the difference illustrated in Fig. 6E, the object data processing unit 303 generates new object data 617. In the present exemplary embodiment, the object data is converted into JPEG compressed data.

The tag information addition unit 302 adds tag information to the object data newly generated by the object data processing unit 303. Examples of tag information include date information and person information. The date information is information indicating the date when editing was performed. The person information is information indicating the name of a person. In the present exemplary embodiment, after the difference is extracted by the difference extraction unit 304, a tag information input screen is displayed on the operation unit 203, and the user inputs the tag information. This tag information is added to the object data. Other methods include a method in which the tag information is embedded in the QR code by the pattern generation unit 305, and a method in which the information to be added as the tag information is pre-specified by the operation unit 203 when the paper document illustrated in Fig. 6D is read by the scanner unit 201. Fig. 6F illustrates a schematic diagram of the object data generated by the object data processing unit 303 and the tag information added by the tag information addition unit 302. In the example illustrated in Fig. 6F, (Date: Match 4) (Name: Mr. D) are added to and associated with the object data 617 as tag information 618.

The format conversion unit 301 adds and stores the object data newly generated by the object data processing unit 303 and the tag information to which information was added by the tag information addition unit 302 in the electronic document data stored in the storage unit 211. In the present exemplary embodiment, the new object data and the tag information are converted into PDF data stored in a new layer. Fig. 6G illustrates a state in which the new object data and the tag information have been converted into PDF data. Fig. 7F illustrates a screen on which the PDF data of Fig. 6G is displayed on the display window 708 of the operation unit 203 when the user sets an object provided with the dates of from March 2 to March 4 to be displayed.

To aid understanding of the embodiment a summary of the embodiment will now be described. First, the PDF data stored in the storage unit 211 is the data 601 illustrated in Fig. 6A. In a printed product printed after the user has set the conditions for this PDF data, the object to be printed out will be selected as illustrated by the data 611 in Fig. 6B. If the user augments or edits the printed product, the paper document looks like the state illustrated in Fig. 6D. If the paper document augmented by the user is scanned, since the address of the PDF data and the object data used in printing can be specified based on the QR code, difference extraction is performed so that the augmented object data 617 can be generated. This augmented new object data is added to and stored in a new layer. This updated PDF data looks like data 619 illustrated in Fig. 6G. More specifically, for an electronically filed document, a QR code can be added to object information selected based on an arbitrary condition set by the user, and the resultant object can be printed out. When this augmented document is scanned, the object printed out based on the QR code can be specified. This allows the newly augmented portion to be correctly extracted. Then, new object data can be generated based on the augmented portion, and this new object data and the tag information can be added to and stored in the original electronic document. Thus, since the augmented portion is accurately extracted and then added to and stored in the original electronic document data, the data capacity required for storage does not have to be large, and updating can be efficiently performed.

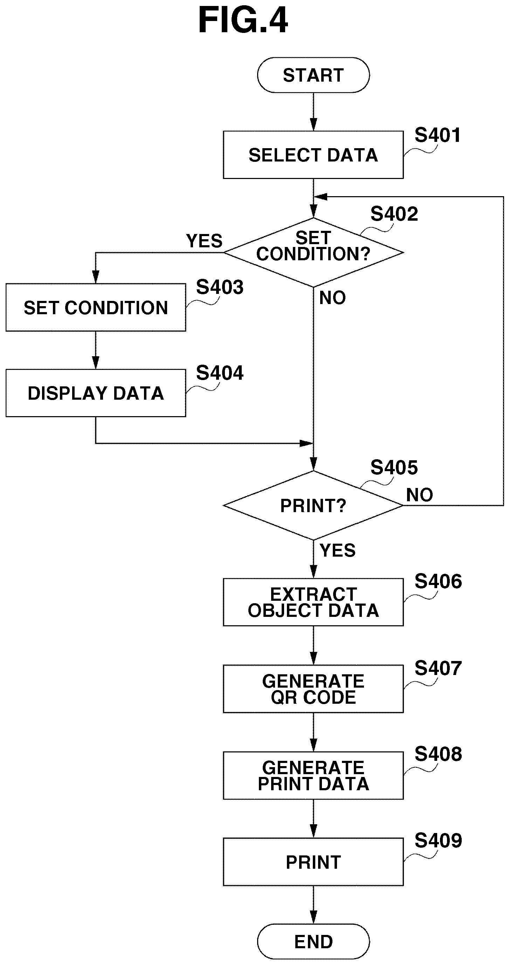

Fig. 4 is a flowchart illustrating the details of the processing performed in the present exemplary embodiment when electronic document data stored in the storage unit 211 is printed based on a condition setting instruction. A program for causing the CPU 205 to function as the respective processing units which execute the various processes in the flowchart is stored in the ROM 210 or the storage unit 211 (computer-readable storage medium) of Fig. 2. The CPU 205 can exchange data with the data processing unit 215 using the image bus interface 212, the system bus 216, and the image bus 217.

First, in step S401, when the data selection button 704 of the operation unit 203 is pressed by the user, the CPU 205 displays a list of the electronic document data stored in the storage unit 211 on the display window 708, as illustrated in Fig. 7A. Next, when the data desired by the user is selected from within the displayed list, the CPU 205 highlights the selected data.

Next, in step S402, when a condition setting instruction is performed by the user (YES in step S402), the processing proceeds to step S403. If a condition is not set (NO in step S402), all of the object data included in the data selected in step S401 is displayed, and the processing proceeds to step S405.

In step S403, when the date button 706 is pressed by the user, the CPU 205 displays a list of dates or a calendar for selecting the date condition on the display window 708. When the desired date is pressed by the user, the CPU 205 highlights the selected date. Further, if the person button 707 is pressed by the user, a list of people's names for selecting the person condition is displayed on the display window 708. When the name of the desired person is pressed by the user, the CPU 205 highlights the selected name. When condition setting is thus finished and the determination button 705 is pressed, the CPU 205 stores the set condition parameter in a storage device such as the RAM 206, and the processing proceeds to step S404. If a not-illustrated cancel button is pressed without the determination button 705 being pressed, the processing may be configured so as to return to step S402.

In step S404, the CPU 205 extracts an object which satisfies the conditions set in step S403 based on the tag information, and displays an image configured from the extracted object data and the background data on the display window 708.

In step S405, when the print button 709 is pressed by the user, the CPU 205 inputs the data selected in step S401 into the data processing unit 215 (YES in step S405), and the processing proceeds to step S406.

In step S406, the object data processing unit 303 illustrated in Fig. 3 extracts the object data which satisfies the condition parameter stored in a storage device such as the RAM 206 in step S403 from the input data (data selected in step S401). If condition setting is not performed in step S402 (NO in step S402), the object data processing unit 303 extracts all of the object data.

Next, in step S407, the pattern generation unit 305 generates the QR code (encoded image pattern) based on the object data extracted by the object data processing unit 303 in step S406. In the QR code, address information (electronic document specifying information) specifying the data stored in the storage unit 211 which was selected in step S401 and object ID information indicating the number of the object data extracted in step S406 are stored.

Next, in step S408, the print data generation unit 307 generates print data by combining the object data and the background data extracted in step S406, and the QR code generated in step S407.

Next, in step S409, the printer unit 202 prints the print data generated in step S408, and finishes the processing.

In the present exemplary embodiment, by performing condition setting, printing out can be performed for only the object data desired by the user. Sometimes, the user may wish to edit, such as newly write in some information, a paper document (a printed product) on which this desired data has been printed. Next, a flowchart will be described for the processing performed when such an edited paper document is scanned.

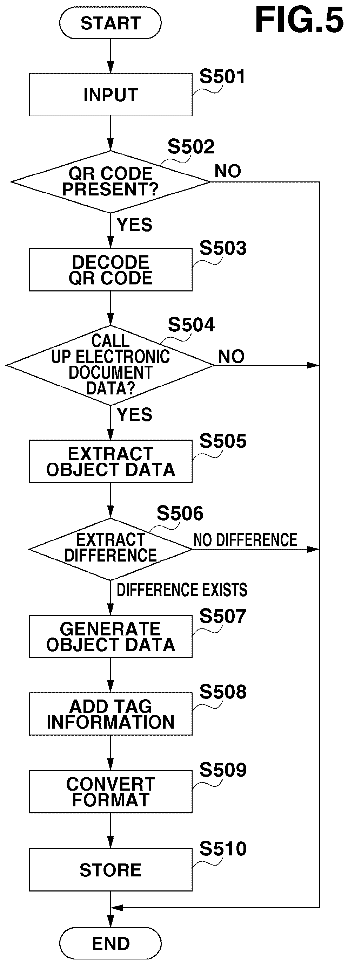

Fig. 5 is a flowchart illustrating the processing performed when a paper document which was printed based on the processing illustrated in Fig. 4 and then augmented or edited is scanned. In this processing, the difference between the image of the scanned paper document and the electronic document data stored in the storage unit 211 is extracted, and the electronic document data is updated and stored in the storage unit 211. The program for causing the CPU 205 to function as the respective processing units which execute the various processes in the flowchart of Fig. 5 is stored in the ROM 210 or the storage unit 211 (computer-readable storage medium).

First, in step S501, the CPU 205 scans the paper document via the scanner unit 201, executes predetermined scan image processing, and inputs the generated bitmap data into the data processing unit 215. Examples of the scan image processing include background color removal processing, color conversion processing, filter processing, and the like.

Next, in step S502, the pattern detection/decoding unit 306 performs QR code (encoded image pattern) detection processing based on the input bitmap image to determine whether there is a QR code or not. If there is a QR code (YES in step S502), the processing proceeds to step S503. If there are no QR codes (NO in step S502), the pattern detection/decoding unit 306 outputs an error message that there is no original electronic document data, and finishes the processing.

In step S503, the pattern detection/decoding unit 306 decodes the QR code to obtain the encoded information. In the present exemplary embodiment, address information indicating the location of the electronic document data stored in the storage unit 211 and object ID information indicating the number of the object data used in printing are obtained. Next, the CPU 205 stores these pieces of information in a storage device such as the RAM 206, and the processing proceeds to step S504.

In step S504, the CPU 205 calls up electronic document data stored in the storage unit 211 based on the address information decoded in step S503. If the calling up is successful (YES in step S504), the called up electronic document data is input into the object data processing unit 303, and the processing proceeds to step S505. If there is no electronic document data in the storage unit 211 (NO in step S504), the CPU 205 outputs an error message via the operation unit 203, and finishes the processing.

In step S505, the object data processing unit 303 extracts the object data corresponding to the object ID information stored in step S503 from the electronic document data called up in step S504. Then, the object data processing unit 303 generates bitmap data by combining the extracted object data and the background.

In step S506, the difference extraction unit 304 extracts the difference between the bitmap data generated in step S505 and the bitmap data input in step S501. When extracting the difference, the QR code portion on the bitmap data input in step S501 is excluded. If there is a difference, the processing proceeds to step S507. If there is no difference, a warning that there is no difference is displayed, and the processing is finished.

In step S507, the object data processing unit 303 generates new object data which is augmented with the difference (a difference image) extracted in step S506.

In step S508, the tag information addition unit 302 adds tag information to the object data generated in step S507.

In step S509, the format conversion unit 301 adds and stores the object data generated in step S507 and the tag information added in step S508 to a new layer of the electronic document data called up in step S504.

Next, in step S510, the CPU 205 stores the electronic document data to which the new object data was added in step S509 in the storage unit 211.

Consequently, as a result of the user setting the conditions for an electronically filed electronic document, arbitrary information can be selected and printed out. Further, even when additional editing is performed on a printed product having such arbitrary information, the difference can be easily extracted by comparing with the objects corresponding to the original electronic document. This enables the objects of the difference to be additionally stored in the original electronic document.

Although the processing is finished as is in step S502 if there are no QR codes and in step S504 if there are no electronic documents called up, the present invention is not limited to this. For example, the processing may be configured so that the scanned image data is stored in a new electronic document.

Depending on the print setting performed when printing the print data in step S409 illustrated in Fig. 4, in step S506 illustrated in Fig. 5, it can become more difficult to extract the difference. For example, when printing the print data, if the paper size is changed or if the enlargement rate is changed in the print setting of the printer driver, extraction of the difference becomes more difficult.

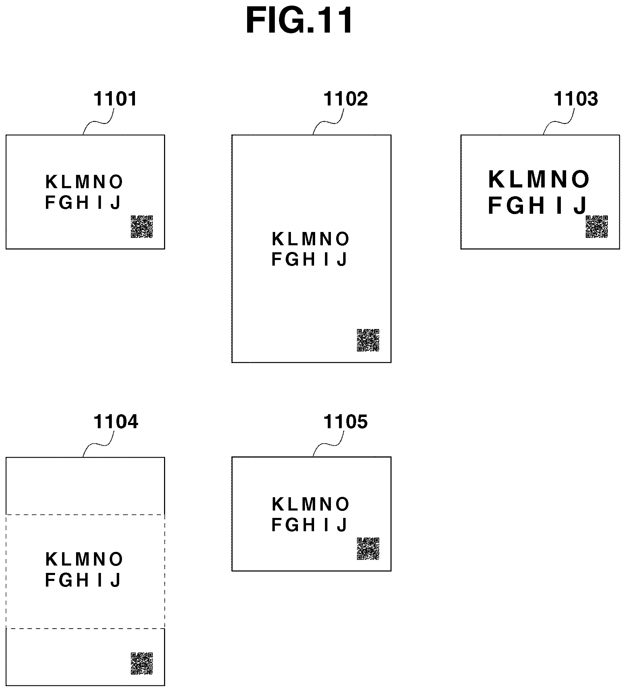

Fig. 11 illustrates an example of print data obtained when a print setting is changed. Data 1101 is an example of the same print data as the print data 611. In print data 1101, the print setting has not been changed, and the default print setting is paper size (A4 landscape) and enlargement rate (100%) . In print data 1102, the paper size has been changed. The print setting is paper size (A3 portrait) and enlargement rate (100%) . In print data 1103, the enlargement rate has been changed. The print setting is paper size (A4 landscape) and enlargement rate (200%) .

When the print setting is changed like in the examples of print data 1102 and 1103, in step S506 of Fig. 5, when the comparison with the original data 1101 is performed, since the position and size of the respective objects do not match, extraction of the difference is difficult.

In a second exemplary embodiment according to the present invention, a method for efficiently updating an electronic document even when a print setting has been changed will be described. In this method, the difference with the original electronic document is extracted by correcting the position and the size of the object data extracted from a scanned image of the printed product. In the second exemplary embodiment, in addition to the respective processing units illustrated in Fig. 3, a correction unit (not illustrated) for correcting the position and the size of the object data is also used.

In the second exemplary embodiment, the processing performed when printing by extracting, of the electronic document data selected from the storage unit 211, the object data which satisfies the conditions set by the user is the same as that described for the flowchart of Fig. 4 according to the first exemplary embodiment. However, instep S407, the pattern generation unit 305 generates a QR code which includes print setting information in addition to the address information and the object ID information. Although in this example paper size and enlargement rate are described as examples of the print setting information, the print setting information may also include information about a color setting, a resolution setting, and the like.

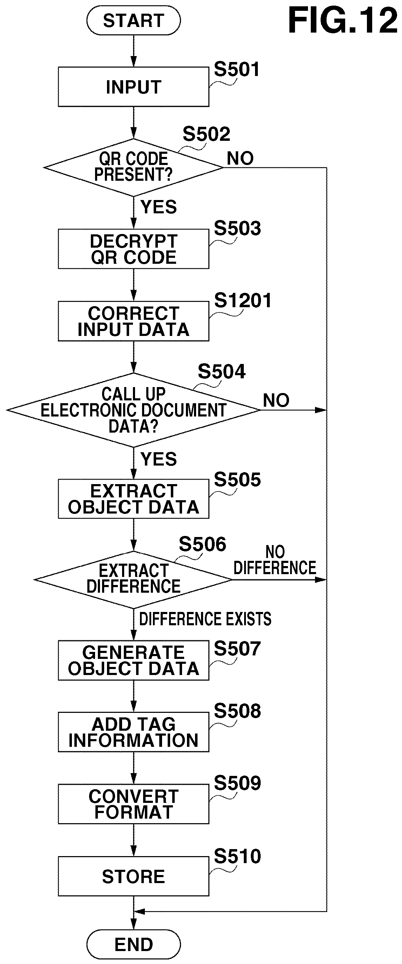

Fig. 12 illustrates the processing performed when updating electronic document data after the user augments/edits a paper document printed based on the flowchart illustrated in Fig. 4. In the processing of Fig. 12, the paper document is scanned, and the difference with the original electronic document data is extracted. A program for causing the CPU 205 to function as the respective processing units which execute the various processes in the flowchart of Fig. 12 is stored in the ROM 210 or the storage unit 211.

The difference between the flowcharts of Fig. 12 and Fig. 5 is the addition of correction of input data in step S1201. A description of the steps similar to those of Fig. 5 will be omitted here.

When a QR code is included in the bitmap data scanned and input in step S501 (YES in step S502), in step S503, the address information, the object ID information, and the print setting information are obtained.

In step S1201, the correction unit performs correction processing on the bitmap data (input data) scanned and input in step S501, based on the print setting information obtained in step S503. For example, when the paper size or enlargement rate has been changed in the print setting information, the correction unit performs position correction processing (processing to correct to the original position at the time of comparison) or magnification processing. In the present exemplary embodiment, "magnification" includes resolution conversion. The magnification method may be performed by a known technique, such as linear magnification, bicubic interpolation, and the like. Further, at this stage, the user can set whether to change the paper size of the original electronic document based on the scanned input data.

Examples (1) to (5) of the correction processing of the input data performed in step S1201 based on the print setting information obtained in step S503 will now be described.
(1) When setting is performed for print setting information of paper size (A3 portrait) and enlargement rate (100%), and no change to the paper size or object data of the original electronic document, position correction based on image clipping is performed. More specifically, an image of the region indicated by the dotted line portion 1104 is cut out from, for example, input data 1102 illustrated in Fig. 11. This cut out portion corresponds to the portion printed based on the object data of the original electronic document. Therefore, difference extraction is performed by a comparison with the object data selected in step S505 based on the object ID information of the original electronic document. More specifically, places which were augmented in the portion region cut out from the input data are generated as new object data in step S507. This new object data is added to and stored in the original electronic document along with the tag information.
(2) When setting is performed for print setting information of paper size (A3 portrait) and enlargement rate (100%), and which permits a change to the paper size of the original electronic document, processing to correct to the original position at the time of comparison is performed. More specifically, original position correction is performed on the input data 1102 or the like illustrated in Fig. 11 so as to match the position of the comparison target original electronic document with the region inside the dotted line of data 1104 during difference extraction. After the difference extraction of step S506 is performed, in step S507, augmented objects are extracted from both inside and outside the dotted line of the input data 1104, and new object data is generated. Then in step S509, the paper size setting of the original electronic document is changed to A3 portrait, and the generated new object data is added to and stored in a new layer. In this example, when printing by changing to A3 portrait, the margin region increases. However, information augmented in this margin region is also added to and stored in the original electronic document.
(3) When the print setting information is paper size (A4 landscape) and enlargement rate (200%), in step S1201, the input data is magnified by 50%. More specifically, when a document image like the data 1103 illustrated in Fig. 11 is scanned and input, the input data is corrected like data 1105 illustrated in Fig. 11 by performing magnification (50%) processing. Although the QR code portion is also reduced by magnification (50%), as described above, because the QR code portion is excluded from the processing target of the difference extraction performed in step S506, there is no effect on the generated image. Further, difference extraction is performed using this corrected image, new object data is generated, and this generated object data is added to and stored in the original electronic document along with the tag information.
(4) When the print setting information is paper size (A4 landscape) and enlargement rate (50%), in step S1201, the input data is magnified by 200%, and processing to correct to the original position at the time of comparison is performed. Since the image is enlarged by 200%, the input data becomes a size equivalent to A3 landscape. A comparison with the portion region corresponding to the original electronic document is performed, and difference extraction processing is carried out. If the setting permits the paper size of the original electronic document to be changed, in step S509, the paper size setting of the original electronic document is changed to A3 landscape, and the generated new object data is added to and stored in a new layer.
(5) When the print setting information is paper size (A4 landscape) and enlargement rate (100%), in step S1201, correction of the input data is not performed. Therefore, the same processing as in the first exemplary embodiment is performed.

As described above, even for a printed product which was printed with changes made to the print settings, by correcting the position and size of data obtained by scanned input, the difference with the original electronic document can be extracted. This allows the electronic document to be efficiently updated.

Aspects of the present invention can also be realized by a computer of a system or apparatus (or devices such as a CPU or MPU) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium) . The present invention may also be embodied in a computer program which on execution by a computer causes a computer or programmable apparatus to carry out the method of any embodiment. The computer program may be carried by a carrier medium such a transmission medium (signal) or a computer-readable storage medium.

While the present invention has been described with reference to exemplary embodiments, it is to be understood that the invention is not limited to the disclosed exemplary embodiments, but is solely defined by the appended claims.

## Claims

1. An image processing apparatus comprising:
a data selection unit (205) for selecting an electronic document based on a user instruction;
object data processing means (303) configured to extract, from a plurality of object data included in the selected electronic document, object data that is associated with tag information which satisfies a condition specified by the user;
pattern generation means (305) configured to generate an encoded image pattern which includes both of object ID information for identifying the object data extracted by the object data processing means and electronic document specifying information for specifying the selected electronic document;
print data generation means (307) configured to generate print data which includes both of the object data extracted by the object data processing means and the encoded image pattern generated by the pattern generation means;
printing means (202) configured to execute print processing of the print data generated by the print data generation means;
input means (214) configured to input an image obtained by scanning a printed product printed by the print processing performed by the printing means;
decoding means (306) configured to detect the encoded image pattern from the image input by the input means, and to decode the object ID information and the electronic document specifying information from the detected encoded image pattern;
**characterized by** comprising:
difference extraction means (304) configured to extract a difference by comparing object data included in the image input by the input means and object data extracted from the electronic document based on the decoded object ID information and the decoded electronic document specifying information;
tag information addition means (302) configured to, based on the difference extracted by the difference extraction means, add tag information for extraction by the object data processing means (303) to the new object data; and
storage control means (301) configured to store the new object data to which the tag information is added by the tag information addition means in the electronic document specified by the electronic document specifying information.

2. The image processing apparatus according to claim 1, further comprising storage means (211) configured to store the electronic document including object data that is associated with the tag information.

3. The image processing apparatus according to claim 1, wherein the pattern generation means is configured to generate the encoded image pattern which includes the object ID information for identifying the object data extracted by the object data processing means, the electronic document specifying information for specifying the electronic document, and information about a print setting when print processing is executed by the printing means,
wherein the decoding means is configured to detect the encoded image pattern from the image input by the input means, and to decode the object ID information, the electronic document specifying information, and the information about a print setting from the detected encoded image pattern, and
wherein the difference extraction means is configured to extract a difference by performing correction processing on the image input by the input means based on the decoded information about a print setting, and comparing object data included in the image subjected to correction processing and object data extracted from the storage means based on the decoded object ID information and the decoded electronic document specifying information.

4. The image processing apparatus according to claim 3, wherein the conversion means is configured to, when a paper size of the electronic document is permitted to be changed, change the paper size of an electronic document specified by the electronic document specifying information based on the decoded information about a print setting, and to add and store the new object data to which tag information is added by the tag information addition means in the electronic document having a changed paper size.

5. The image processing apparatus according to any preceding claim, wherein the encoded image pattern is a two-dimensional code.

6. The image processing apparatus according to any preceding claim, wherein the tag information includes at least one of date information and identity information.

7. An image processing method executed by an image processing apparatus, the image processing method comprising:
selecting an electronic document based on an instruction of a user;
extracting, from a plurality of object data included in the selected electronic document, object data that is associated with tag information which satisfies a condition specified by the user;
generating an encoded image pattern which includes both of object ID information for identifying the extracted object data, and electronic document specifying information for specifying the selected electronic document;
generating print data which includes both of the extracted object data and the encoded image pattern;
executing print processing of the generated print data;
inputting an image obtained by scanning a printed product printed by the performed print processing;
detecting the encoded image pattern from the input image, and to decode the object ID information and the electronic document specifying information from the detected encoded image pattern;
**characterized by**:
extracting a difference by comparing object data included in the input image and object data extracted from the electronic document based on the decoded object ID information and the decoded electronic document specifying information;
adding, based on the extracted difference, tag information for the extraction to the new object data; and
storing the new object data to which the tag information is added in the electronic document specified by the electronic document specifying information.

8. The image processing method according to claim 7, wherein the image processing apparatus includes storage means configured to store the electronic document including object data that is associated with the tag information.

9. A computer program which on execution by a programmable image processing apparatus causes the image processing apparatus to implement the method of any one of claims 7 and 8.

10. A carrier medium carrying the computer program of claim 9.

## Patentansprüche

1. Bildverarbeitungsvorrichtung, umfassend:
eine Datenauswahleinheit (205) zum Auswählen eines elektronischen Dokuments basierend auf einer Benutzeranweisung;
eine Objektdaten-Verarbeitungseinrichtung (303), die konfiguriert ist, aus mehreren im ausgewählten elektronischen Dokument enthaltenen Objektdaten solche Objektdaten zu extrahieren, die einer eine durch den Benutzer spezifizierte Bedingung erfüllenden Taginformation zugeordnet sind;
eine Mustererzeugungseinrichtung (305), die konfiguriert ist, ein kodiertes Bildmuster zu erzeugen, welches sowohl Objektidentifikationsinformation zum Identifizieren der durch die Objektdaten-Verarbeitungseinrichtung extrahierten Objektdaten als auch ein elektronisches Dokument spezifizierende Information zum Spezifizieren des ausgewählten elektronischen Dokuments enthält;
eine Druckdaten-Erzeugungseinrichtung (307), die konfiguriert ist, Druckdaten zu erzeugen, die sowohl die durch die Objektdaten-Verarbeitungseinrichtung extrahierten Objektdaten als auch das durch die Mustererzeugungseinrichtung erzeugte kodierte Bildmuster enthalten;
eine Druckeinrichtung (202), die konfiguriert ist, Druckverarbeitung der durch die Druckdaten-Erzeugungseinrichtung erzeugten Druckdaten auszuführen;
eine Eingabeeinrichtung (214), die konfiguriert ist, ein Bild einzugeben, das durch Scannen eines durch die von der Druckeinrichtung durchgeführte Druckverarbeitung gedruckten Druckerzeugnisses erhalten wird;
eine Dekodiereinrichtung (306), die konfiguriert ist, das kodierte Bildmuster aus dem durch die Eingabeeinrichtung eingegebenen Bild zu detektieren und die Objektidentifikationsinformation sowie die ein elektronisches Dokument spezifizierende Information aus dem detektierten kodierten Bildmuster zu dekodieren;
**gekennzeichnet durch** Umfassen:
einer Differenzextraktionseinrichtung (304), die konfiguriert ist, durch Vergleichen von im durch die Eingabeeinrichtung eingegebenen Bild enthaltenen Objektdaten mit aus dem elektronischen Dokument extrahierten Objektdaten, basierend auf der dekodierten Objektidentifikationsinformation und der dekodierten, ein elektronisches Dokument spezifizierenden Information eine Differenz zu extrahieren;
einer Taginformation-Hinzufügeeinrichtung (302), die konfiguriert ist, basierend auf der durch die Differenzextraktionseinrichtung extrahierten Differenz den neuen Objektdaten Taginformation zur Extraktion durch die Objektdaten-Verarbeitungseinrichtung (303) hinzuzufügen; und
einer Speichersteuereinrichtung (301), die konfiguriert ist, die neuen Objektdaten, denen die Taginformation durch die Taginformation-Hinzufügeeinrichtung hinzugefügt wird, im durch die ein elektronisches Dokument spezifizierende Information spezifizierten elektronischen Dokument zu speichern.

2. Bildverarbeitungsvorrichtung nach Anspruch 1, ferner umfassend eine Speichereinrichtung (211), die konfiguriert ist, das elektronische Dokument einschließlich der der Taginformation zugeordneten Objektdaten zu speichern.

3. Bildverarbeitungsvorrichtung nach Anspruch 1, wobei die Mustererzeugungseinrichtung konfiguriert ist, das kodierte Bildmuster zu erzeugen, welches die Objektidentifikationsinformation zum Identifizieren der durch die Objektdaten-Verarbeitungseinrichtung extrahierten Objektdaten, die ein elektronisches Dokument spezifizierende Information zum Spezifizieren des elektronischen Dokuments und Information über eine Druckeinstellung bei Ausführung einer Druckverarbeitung durch die Druckeinrichtung enthält,
wobei die Dekodiereinrichtung konfiguriert ist, das kodierte Bildmuster aus dem durch die Eingabeeinrichtung eingegebenen Bild zu detektieren und die Objektidentifikationsinformation, die ein elektronisches Dokument spezifizierende Information und die Information über eine Druckeinstellung aus dem detektierten kodierten Bildmuster zu dekodieren, und
wobei die Differenzextraktionseinrichtung konfiguriert ist, durch Durchführen einer Korrekturverarbeitung am durch die Eingabeeinrichtung eingegebenen Bild basierend auf der dekodierten Information über eine Druckeinstellung, und durch Vergleichen von im der Korrekturverarbeitung unterzogenen Bild enthaltenen Objektdaten mit aus der Speichereinrichtung extrahierten Objektdaten, basierend auf der dekodierten Objektidentifikationsinformation und der dekodierten, ein elektronisches Dokument spezifizierenden Information eine Differenz zu extrahieren.

4. Bildverarbeitungsvorrichtung nach Anspruch 3, wobei die Umwandlungseinrichtung konfiguriert ist, wenn das Ändern einer Papiergröße des elektronischen Dokuments erlaubt ist, die Papiergröße eines durch die ein elektronisches Dokument spezifizierende Information spezifizierten elektronischen Dokuments basierend auf der dekodierten Information über eine Druckeinstellung zu ändern, und die neuen Objektdaten, denen durch die Taginformation-Hinzufügeeinrichtung Taginformation hinzugefügt wird, im elektronischen Dokument mit geänderter Papiergröße hinzuzufügen und zu speichern.

5. Bildverarbeitungsvorrichtung nach einem der vorhergehenden Ansprüche, wobei das kodierte Bildmuster ein zweidimensionaler Code ist.

6. Bildverarbeitungsvorrichtung nach einem der vorhergehenden Ansprüche, wobei die Taginformation Datumsinformation und/oder Identitätsinformation enthält.

7. Von einer Bildverarbeitungsvorrichtung ausgeführtes Bildverarbeitungsverfahren, umfassend:
Auswählen eines elektronischen Dokuments basierend auf einer Benutzeranweisung;
Extrahieren, aus mehreren im ausgewählten elektronischen Dokument enthaltenen Objektdaten, von Objektdaten, die einer eine durch den Benutzer spezifizierte Bedingung erfüllenden Taginformation zugeordnet sind;
Erzeugen eines kodierten Bildmusters, welches sowohl Objektidentifikationsinformation zum Identifizieren der extrahierten Objektdaten als auch ein elektronisches Dokument spezifizierende Information zum Spezifizieren des ausgewählten elektronischen Dokuments enthält;
Erzeugen von Druckdaten, die sowohl die extrahierten Objektdaten als auch das kodierte Bildmuster enthalten;
Ausführen einer Druckverarbeitung der erzeugten Druckdaten;
Eingeben eines Bildes, das durch Scannen eines von der durchgeführten Druckverarbeitung gedruckten Druckerzeugnisses erhalten wird;
Detektieren des kodierten Bildmusters aus dem eingegebenen Bild und Dekodieren der Objektidentifikationsinformation sowie der ein elektronisches Dokument spezifizierenden Information aus dem detektierten kodierten Bildmuster;
**gekennzeichnet durch**:
Extrahieren einer Differenz durch Vergleichen von im eingegebenen Bild enthaltenen Objektdaten mit aus dem elektronischen Dokument extrahierten Objektdaten, basierend auf der dekodierten Objektidentifikationsinformation und der dekodierten, ein elektronisches Dokument spezifizierenden Information;
Hinzufügen, basierend auf der extrahierten Differenz, von Taginformation zur Extraktion zu den neuen Objektdaten; und
Speichern der neuen Objektdaten, denen die Taginformation hinzugefügt wird, im durch die ein elektronisches Dokument spezifizierende Information spezifizierten elektronischen Dokument.

8. Bildverarbeitungsverfahren nach Anspruch 7, wobei die Bildverarbeitungsvorrichtung eine Speichereinrichtung enthält, die konfiguriert ist, das elektronische Dokument einschließlich der Taginformation zugeordneten Objektdaten zu speichern.

9. Computerprogramm, das bei Ausführung durch eine programmierbare Bildverarbeitungsvorrichtung diese veranlasst, das Verfahren nach einem der Ansprüche 7 und 8 zu implementieren.

10. Trägermedium, welches das Computerprogramm nach Anspruch 9 trägt.

## Revendications

1. Appareil de traitement d'image, comprenant :
une unité de sélection de données (205) destinée à sélectionner un document électronique sur la base d'une instruction d'utilisateur ;
un moyen de traitement de données d'objet (303) configuré pour extraire, d'une pluralité de données d'objet comprises dans le document électronique sélectionné, des données d'objet qui sont associées à des informations de balise qui satisfont à une condition spécifiée par l'utilisateur ;
un moyen de génération de motif (305) configuré pour générer un motif d'image codé qui comprend à la fois des informations d'ID d'objet destinées à identifier les données d'objet extraites par le moyen de traitement de données d'objet et des informations de spécification de document électronique destinées à spécifier le document électronique sélectionné ;
un moyen de génération de données d'impression (307) configuré pour générer des données d'impression qui comprennent à la fois les données d'objet extraites par le moyen de traitement de données d'objet et le motif d'image codé généré par le moyen de génération de motif ;
un moyen d'impression (202) configuré pour exécuter un traitement d'impression des données d'impression générées par le moyen de génération de données d'impression ;
un moyen d'entrée (214) configuré pour entrer une image obtenue par un balayage d'un produit imprimé, imprimé par le traitement d'impression effectué par le moyen d'impression ;
un moyen de décodage (306) configuré pour détecter le motif d'image codé à partir de l'image entrée par le moyen d'entrée, et pour décoder les informations d'ID d'objet et les informations de spécification de document électronique à partir du motif d'image codé détecté ;
**caractérisé en ce qu'**il comprend :
un moyen d'extraction de différence (304) configuré pour extraire une différence par une comparaison de données d'objet comprises dans l'image entrée par le moyen d'entrée et de données d'objet extraites du document électronique sur la base des informations d'ID d'objet décodées et des informations de spécification de document électronique décodées ;
un moyen d'addition d'informations de balise (302) configuré pour, sur la base de la différence extraite par le moyen d'extraction de différence, ajouter des informations de balise pour l'extraction par le moyen de traitement de données d'objet (303) aux nouvelles données d'objet ; et
un moyen de commande de mémorisation (301) configuré pour mémoriser les nouvelles données d'objet auxquelles les informations de balise ont été ajoutées par le moyen d'addition d'informations de balise dans le document électronique spécifié par les informations de spécification de document électronique.

2. Appareil de traitement d'image selon la revendication 1, comprenant en outre un moyen de mémorisation (211) configuré pour mémoriser le document électronique comprenant des données d'objet qui sont associées aux informations de balise.

3. Appareil de traitement d'image selon la revendication 1, dans lequel le moyen de génération de motif est configuré pour générer le motif d'image codé qui comprend les informations d'ID d'objet destinées à identifier les données d'objet extraites par le moyen de traitement de données d'objet, les informations de spécification de document électronique destinées à spécifier le document électronique, et des informations concernant une définition d'impression lorsque le traitement d'impression est exécuté par le moyen d'impression,
dans lequel le moyen de décodage est configuré pour détecter le motif d'image codé à partir de l'image entrée par le moyen d'entrée, et pour décoder les informations d'ID d'objet, les informations de spécification de document électronique et les informations concernant une définition d'impression à partir du motif d'image codé détecté, et
dans lequel le moyen d'extraction de différence est configuré pour extraire une différence par une application d'un traitement de correction à l'image entrée par le moyen d'entrée sur la base des informations décodées concernant une définition d'impression, et par une comparaison des données d'objet comprises dans l'image soumise au traitement de correction et des données d'objet extraites du moyen de mémorisation sur la base des informations d'ID d'objet décodées et des informations de spécification de document électronique décodées.

4. Appareil de traitement d'image selon la revendication 3, dans lequel le moyen de conversion est configuré pour, lorsqu'une taille de papier du document électronique fait l'objet d'une autorisation de modification, modifier la taille de papier d'un document électronique spécifié par les informations de spécification de document électronique sur la base des informations décodées concernant une définition d'impression, et pour ajouter et mémoriser les nouvelles données d'objet auxquelles des informations de balise sont ajoutées par le moyen d'addition d'informations de balise dans le document électronique dont la taille de papier a été modifiée.

5. Appareil de traitement d'image selon l'une quelconque des revendications précédentes, dans lequel le motif d'image codé est un code bidimensionnel.

6. Appareil de traitement d'image selon l'une quelconque des revendications précédentes, dans lequel les informations de balise comprennent au moins certaines parmi des informations de date et des informations d'identité.

7. Procédé de traitement d'image exécuté par un appareil de traitement d'image, le procédé de traitement d'image comprenant les étapes consistant à :
sélectionner un document électronique sur la base d'une instruction d'un utilisateur ;
extraire, d'une pluralité de données d'objet comprises dans le document électronique sélectionné, des données d'objet qui sont associées à des informations de balise qui satisfont à une condition spécifiée par l'utilisateur ;
générer un motif d'image codé qui comprend à la fois des informations d'ID d'objet destinées à identifier les données d'objet extraites, et des informations de spécification de document électronique destinées à spécifier le document électronique sélectionné ;
générer des données d'impression qui comprennent à la fois les données d'objet extraites et le motif d'image codé ;
exécuter un traitement d'impression des données d'impression générées ;
entrer une image obtenue par un balayage d'un produit imprimé, imprimé par le traitement d'impression effectué ;
détecter le motif d'image codé à partir de l'image d'entrée, et pour décoder les informations d'ID d'objet et les informations de spécification de document électronique à partir du motif d'image codé détecté ;
**caractérisé par** les étapes consistant à :
extraire une différence par une comparaison de données d'objet comprises dans l'image d'entrée et de données d'objet extraites du document électronique sur la base des informations d'ID d'objet décodées et des informations de spécification de document électronique décodées ;
ajouter, sur la base de la différence extraite, des informations de balise pour l'extraction aux nouvelles données d'objet ; et
mémoriser les nouvelles données d'objet auxquelles les informations de balise sont ajoutées dans le document électronique spécifié par les informations de spécification de document électronique.

8. Procédé de traitement d'image selon la revendication 7, dans lequel l'appareil de traitement d'image comprend un moyen de mémorisation configuré pour mémoriser le document électronique comprenant des données d'objet qui sont associées aux informations de balise.

9. Programme informatique qui, lorsqu'il est exécuté par un appareil de traitement d'image programmable, amène l'appareil de traitement d'image à mettre en œuvre le procédé selon l'une quelconque des revendications 7 et 8.

10. Support d'informations comportant le programme informatique selon la revendication 9.
